# EUROPÄISCHE PATENTANMELDUNG

(11) **EP 4 438 333 A1**
(43) Veröffentlichungstag der Anmeldung: **02.10.2024**
(21) Anmeldenummer: 24163046.6
(22) Anmeldetag: 12.03.2024
(51) Int. Cl.: B60C 9/00, B60C 11/00, B60C 11/14

(54) **LAUFSTREIFEN FÜR EINEN FAHRZEUGREIFEN UND HERSTELLUNGSVERFAHREN**

(30) Priorität: 28.03.2023 DE 102023202813
(71) Anmelder: Continental Reifen Deutschland GmbH, 30175 Hannover (DE)
(72) Erfinder: Strübel, Christian, 30175 Hannover (DE); Bederna, Christoph, 30175 Hannover (DE); Römer, Justus, 30175 Hannover (DE)
(74) Vertreter: Continental Corporation

(57) **Zusammenfassung**

Die Erfindung betrifft einen Laufstreifen für einen Fahrzeugreifen.

Es besteht ein Zielkonflikt zwischen einem niedrigen Rollwiderstand des Laufstreifens auf der einen Seite und dessen Steifigkeit bzw. guten Handlingeigenschaften auf der anderen Seite.

Zur Lösung dieses Problems wird vorgeschlagen, durch den Laufstreifen verlaufende Textilcorde vorzusehen.

## Beschreibung

Die Erfindung betrifft einen Laufstreifen für einen Fahrzeugreifen.

Der Laufstreifen eines Fahrzeugreifens steht nicht nur in direkter Verbindung zur Fahrbahnoberfläche und entscheidet somit über die Traktion des Reifens, sondern ist darüber hinaus auch entscheidend für den Rollwiderstand des Fahrzeugreifens und dessen Steifigkeit, die wiederum Einfluss auf das Handling hat. Soll der Rollwiderstand durch Anpassung einer für den Laufstreifen verwendeten Gummimischung optimiert werden, so leidet hierunter für gewöhnlich die Steifigkeit. Dies spiegelt sich auch in üblichen Gummimischungen für die Laufstreifen-Cap und -Base wider, bei denen der Elastizitätsmodul auf Rollwiderstand optimierter Varianten normalerweise niedriger ist als der Elastizitätsmodul nicht auf Rollwiderstand optimierter Varianten. Somit besteht ein Zielkonflikt zwischen einem niedrigen Rollwiderstand des Laufstreifens auf der einen Seite und der Steifigkeit bzw. guten Handlingeigenschaften auf der anderen Seite.

Gemäß dem Stand der Technik werden verschiedene Möglichkeiten erwogen, vorteilhaft in die beschriebene Problematik einzuwirken. So beschreibt beispielsweise EP 2 522 530 B1 einen Laufstreifen mit Cap und Base, wobei die Base in mehrere Zonen aufgeteilt ist und wobei einer Gummimischung für axial äußere Zonen kurze Fasern zur Verbesserung der Steifigkeit beigemischt werden.

Der Erfindung liegt die Aufgabe zugrunde, einen Laufstreifen und ein Verfahren für dessen Herstellung zu schaffen, wobei der Laufstreifen in Hinblick auf Rollwiderstand und Handling gleichermaßen gute Eigenschaften aufweist.

Die gestellte Aufgabe wird erfindungsgemäß dadurch gelöst, dass durch den Laufstreifen verlaufende Textilcorde vorgesehen werden.

Die Erfindung erkennt, dass Textilcorde zur Schafffung von erhöhter Steifigkeit in einem Laufstreifen geeignet sind, ohne sich negativ auf den Rollwiderstand auszuwirken. Negative Auswirkungen auf den Rollwiderstand bleiben deshalb aus, weil Textilcorde im Vergleich zu Gummimischungen eine niedrige Hysterese aufweisen. Außerdem kann ein nichtisotroper Verlauf der Texticorde so gewählt werden, dass für das Handling entscheidende Kräfte besonders gut aufgenommen werden.

Sofern in Bezug zu dem Fahrzeugreifen die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft.

Die mit den Merkmalen des Hauptanspruchs erzielten Effekte werden durch bevorzugte Ausführungsformen und Ausgestaltungen unterstützt und weiter verstärkt.

In einer bevorzugten Ausführungsform weist der Verlauf der Textilcorde durch den Laufstreifen eine Richtungskomponente in Axialrichtung auf. Demgemäß liegt wenigstens für einen der Textilcorde, vorzugsweise für wenigstens die Hälfte der Textilcorde eine Richtungskomponente in Axialrichtung gemäß folgender Definition vor: Wird der Verlauf eines Textilcords entlang seiner Länge fortlaufend mit einem Richtungsvektor aus Axialrichtung, Umfangsrichtung und Radialrichtung beschrieben und wird zwischen den beiden Enden des Textilcords jeweils ein Integral über die Absolutbeträge der Einträge des Richtungsvektors gebildet, so weist der Textilcord dann eine Richtungskomponente in Axialrichtung auf, wenn das Integral zur Axialrichtung ungleich Null ist. Demgemäß können beispielsweise sowohl ein entlang einer geraden Linie als auch entlang einer geschlossenen Schleife verlaufender Textilcord eine Richtungskomponente in Axialrichtung aufweisen. Das Integral zur Axialrichtung beträgt vorzugsweise wenigstens 1 cm, weiter vorzugsweise wenigstens 10 cm. Ein entsprechender Textilcord hat eine dem Wert des Integrals zur Axialrichtung entsprechende zusammenhängende Länge, wenn er ausschließlich in Axialrichtung verläuft und hat eine größere zusammenhängende Länge, wenn er mehrere von Null verschiedene Richtungskomponenten aufweist. Durch die Komponente in Axialrichtung kann der Textilcord Seitenkräfte besonders wirkungsvoll aufnehmen und verteilen, was für das Handling besonders wichtig ist.

Der Verlauf der Textilcorde durch den Laufstreifen kann eine Hauptrichtungskomponente in Axialrichtung aufweisen. In der obigen mathematischen Beschreibung hat ein Textilcord dann eine Hauptrichtungskomponente in Axialrichtung, wenn das Integral bei der Axialrichtung größer als die Integrale oder gleich den Integralen bei den beiden zur Axialrichtung senkrechten Richtungskomponenten ist. Dies wäre beispielsweise bei einem kreisförmigen Verlauf eines Textilcords in einer von der Axialrichtung und der Umfangsrichtung aufgespannten Ebene der Fall.

Vorzugsweise umfasst der Laufstreifen eine Cap und eine Base, wobei die Textilcorde radial zwischen der Cap und der Base angeordnet sind. Auf diese Weise ist eine gute Einbettung gegeben. Wenn die Textilcorde im Gegensatz hierzu in den Bereich der Cap eindringen würden, könnte die Gefahr bestehen, dass sie bei stärkerem Reifenabrieb mit der Fahrbahnoberfläche in Kontakt kommen und auf diese Weise das Traktionsverhalten negativ beeinflussen. Wenn die Textilcorde auf der anderen Seite ausschließlich in der Base verlaufen würden, könnte ihre Wirkung in den für das Handling entscheidenden Bereichen des Laufstreifens vermindert sein.

In einer bevorzugten Ausführungsform ist der Verlauf der Textilcorde in dem Laufstreifen entlang der Radialrichtung moduliert. Modulation bedeutet in diesem Kontext, dass ein Textilcord wenigstens ein radiales Minimum oder Maximum in seinem Verlauf durch den Laufstreifen aufweist. Dies gilt wenigstens für einen, vorzugsweise für wenigsten die Hälfte der Textilcorde. Vorzugsweise weist der Verlauf eines Textilcordes mehrere radiale Minima und Maxima auf, sodass eine Projektion des Textilcords auf eine die Radialrichtung umfassende Ebene eine Wellenbewegung mit radialer Hubrichtung innerhalb der radialen Erstreckung des Laufstreifens beschreibt. Auf diese Weise kann sich ein Textilcord in dem Gummi des Laufstreifens solchermaßen verzahnen, dass dem Laufstreifen gegenüber lateralen Kräften, senkrecht zur Radialrichtung, eine zusätzliche Steifigkeit verliehen wird.

Der Laufstreifen kann ein Profil mit in Radialrichtung modulierter Profiloberfläche umfassen, wie es für sich genommen und dem Prinzip nach aus dem Stand der Technik bekannt ist. Das Profil kann dementsprechend beispielsweise Umfangsrillen, Quer- und/oder Schrägrillen und optional Lamellen umfassen, wobei die Profiloberfläche beispielsweise am Grund einer Rille eine niedrigere radiale Höhe aufweist als am Rand der Rille oder auf einem benachbarten Profilblock. Die radiale Modulation des Verlaufs der Textilcorde kann der radialen Modulation der Profiloberfläche mit einer verringerten Amplitude im Wesentlichen folgen. Das Folgen der einen durch die andere Modulation kann beispielsweise bedeuten, dass ein Textilcord radial unterhalb einer Rille radial auf einem niedrigeren Niveau durch den Laufstreifen verlaufen kann als unter einem der Rille benachbarten Profilblock. Eine verringerte Amplitude liegt in diesem Beispiel vor, wenn der Unterschied zwischen den radialen Niveaus des Textilcords kleiner ist als der Unterschied zwischen den radialen Niveaus des Rillengrundes und der Profilblockoberfläche. Die Einschränkung "im Wesentlichen" bedeutet, dass eine qualitative Ähnlichkeit der Modulationen ausreichen kann, ohne dass beispielsweise entlang des Verlaufs eines Textilcords ein einheitlicher Skalenfaktor zur Übersetzung der Modulation der Profiloberfläche in eine radiale Modulation des Textilcords gegeben sein muss. Es können zudem lokale Abweichungen vorliegen, an denen die radialen Modulationen der Profiloberfläche und eines Textilcords sich gegenläufig verhalten oder anderweitig nicht miteinander korrespondieren, solange die radialen Modulationen entlang des Verlaufs eines Textilcords im Mittel einen qualitativen Gleichlauf zur Profiloberfläche aufweisen. Auf die beschriebene Weise kann die radiale Modulation der Textilcorde besonders günstig über den Laufstreifen verteilt werden, ohne dass die Textilcorde zu nahe an die Profiloberfläche gelangen oder diese gar durchstoßen.

Die auf eine von der Axialrichtung und der Umfangsrichtung aufgespannte Fläche projizierten Verläufe der Textilcorde verlaufen vorzugsweise in einem Winkel von weniger als 90°, weiter vorzugsweise von weniger als 45° und noch weiter vorzugsweise von weniger als 20° zu der Axialrichtung. Die Projektionen der Textilcorde auf die von der Axialrichtung und der Umfangsrichtung aufgespannte Fläche können im Koordinatensystem aus Axialrichtung und Umfangsrichtung im Wesentlichen entlang von geraden Linien verlaufen. Durch die wenigstens teilweise Ausrichtung in Axialrichtung kann der Textilcord Seitenkräfte besonders wirkungsvoll aufnehmen und verteilen, was für die Handlingeigenschaften wichtig ist. Durch einen im Wesentlichen geraden Verlauf der Texilcorde können die Kräfte gleichmäßig aufgenommen und verteilt werden.

Vorzugsweise erstrecken sich die Textilcorde über die gesamte axiale Breite des Laufstreifens. Auf diese Weise kann der vorteilhafte Versteifungseffekt über die gesamte Breite des Laufstreifens erzielt werden. Dadurch, dass die axiale Breite von einem zusammenhängenden Textilcord oder von mehreren zusammenhängenden Textilcorden jeweils überspannt wird, kann im Vergleich zum Einsatz von kürzeren Fasern zusätzliche Stabilität gewonnen werden.

Die durch den Laufstreifen verlaufenden Textilcorde können mit weiteren Textilcorden verwoben sein. Die weiteren Textilcorde sind von den bisher beschriebenen Textilcorden zu unterscheiden. Wenn vor- und/oder nachstehend beispielsweise von der Hälfte der Textilcorde gesprochen wird, sind die weiteren Textilcorde nicht in diese Gesamtheit mit einzubeziehen. Die weiteren Textilcorde können aber eine gesondert zu betrachtende Gruppe bilden, für die eines oder alle der vor- und oder nachstehend für die Textilcorde beschriebenen Merkmale ebenfalls zutrifft. Beispielsweise kann auch wenigstens ein weiterer Textilcord und können vorzugsweise wenigstens die Hälfte aller weiteren Textilcorde eine Richtungskomponente in Axialrichtung aufweisen. In einer Ausführungsform sind die Textilcorde und die weiteren Textilcorde gitterförmig miteinander verwoben, wobei die Gruppe der Textilcorde und die Gruppe der weiteren Textilcorde jeweils wenigstens eines oder mehrere der vor- und/oder nachstehend beschriebenen Merkmale aufweisen. Beispielsweise können die Projektionen aller Textilcorde auf eine von der Umfangsrichtung und Axialrichtung aufgespannte Ebene in einem Winkel von weniger als 45° zur Axialrichtung verlaufen, wobei die weiteren Textilcorde im Wesentlichen an der Reifenäquatorebene zu den Textilcorden gespiegelt in dem Laufstreifen angeordnet sind.

Die Textilcorde können Polyester, Nylon, Aramid oder Mischungen dieser Materialien umfassen. Die Textilcorde können aus den genannten Materialien oder Materialmischungen bestehen. Auf diese Weise kann auf im Reifenbau an sich bekannte Materialien zurückgegriffen werden, wobei sich in der erfindungsgemäß neuen Anwendung unerwartet vorteilhafte Effekte erzielen lassen.

In einer Ausführungsform können die Textilcorde jeweils einen Durchmesser zwischen 0,3 und 1,0 mm aufweisen. Alternativ oder zusätzlich können die Textilcorde in Abständen zwischen 0,1 und 10 mm zueinander verlaufen. Auf diese Weise lassen sich gute Kompromisse zwischen Stabilität auf der einen Seite und schlankem sowie leichtem Design auf der anderen Seite erzielen.

Die Erfindung betrifft außerdem einen Fahrzeugreifen mit einem erfindungsgemäßen Laufstreifen. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Die Erfindung betrifft außerdem ein Verfahren zur Herstellung eines Laufstreifens für einen Fahrzeugreifen, wobei zunächst eine Base bereitgestellt wird. Erfindungsgemäß werden die Textilcorde auf einer radialen Außenseite der Base des Laufstreifens platziert, wobei eine Cap radial über der Base und über den Textilcorden aufgebracht wird.

Die Textilcorde werden vorzugsweise so auf der radialen Außenseite der Base platziert, dass ihr Verlauf eine Richtungskomponente in Axialrichtung aufweist und weiter vorzugsweise eine Hauptrichtungskomponente in Axialrichtung aufweist.

Die Textilcorde können über der Base aufgespult werden oder, beispielsweise verwoben mit weiteren Textilcorden, im Verbund über die Base gelegt werden. Die Cap kann gemäß einer Ausführungsform in an sich bekannter Weise über der Base und den Textilcorden aufgespult werden.

Die Base, die Textilcorde und die Cap können in einer Reifenform, umfassend ein Profilnegativ weiterverarbeitet werden, wobei die radial äußere Oberfläche der Cap in Radialrichtung zu einer Profiloberfläche moduliert wird. Hierbei kann die Modulation durch das Material des Laufstreifens so nach radial innerhalb vordringen, dass der Verlauf der Textilcorde der Modulation der Profiloberfläche mit einer verringerten Amplitude im Wesentlichen folgt. Für diesen Vorgang kann der Laufstreifen in einer bestimmungsgemäßen Position an einem Fahrzeugreifen angebracht sein, wobei der Fahrzeugreifen samt Laufstreifen in der Reifenform vulkanisiert werden kann.

Das Verfahren zur Herstellung eines Laufstreifens kann mit Merkmalen fortgebildet werden, die im Zusammenhang mit dem erfindungsgemäßen Laufstreifen und/oder Fahrzeugreifen beschrieben werden. Umgekehrt kann der erfindungsgemäße Laufstreifen mit Merkmalen fortgebildet werden, die im Zusammenhang mit dem erfindungsgemäßen Verfahren beschrieben werden.

Die Erfindung wird nachfolgend unter Bezugnahme auf die beigefügten Zeichnungen anhand vorteilhafter Ausführungsformen beispielhaft beschrieben. Es zeigen:
Figur 1 schematisch und ausschnittsweise eine Schnittansicht eines Fahrzeugreifens mit einem Laufstreifen gemäß einer Ausführungsform der Erfindung,
Figur 2 schematisch und ausschnittsweise eine Draufsicht auf die gemäß einer Ausführungsform der Erfindung durch einen Laufstreifen verlaufenden Textilcorde.

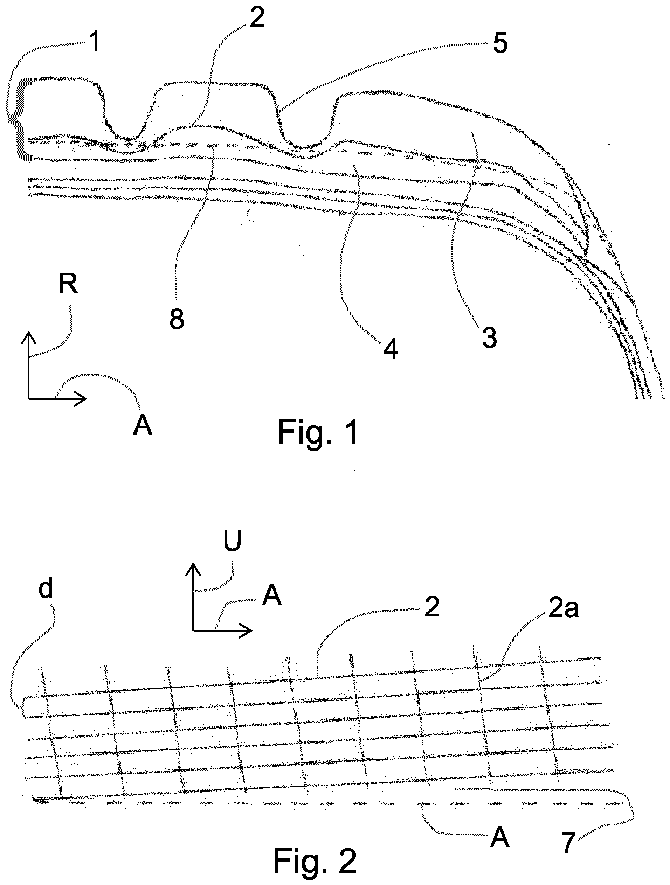

Figur 1 zeigt einen radial und axial äußeren Abschnitt eines Fahrzeugreifens in einer von der Radialrichtung R und Axialrichtung A aufgespannten Schnittebene (vgl. Koordinatenkreuz in der linken unteren Ecke der Abbildung). Ein den Fahrzeugreifen radial abschließender Laufstreifen 1 umfasst eine Cap 3 und eine Base 4. Zwischen der Cap 3 und der Base 4 verlaufen Textilcorde 2 durch den Laufstreifen 1. Die mit dem Referenzzeichen 2 gekennzeichnete Linie kann den Verlauf eines Textilcords 2 und/oder den Querschnitt einer Fläche darstellen, innerhalb derer mehrere Textilcorde 2 durch den Laufstreifen 1 verlaufen. Der Laufstreifen ist mit einem Profil versehen, welches mit einer Profiloberfläche 5 in Radialrichtung R moduliert ist. Der Verlauf der Textilcorde 2 ist ebenfalls moduliert und folgt der Modulation der Profiloberfläche 5 in Axialrichtung A im Wesentlichen, wobei die radiale Amplitude der Modulation der Textilcorde 2 geringer ist als die radiale Amplitude der Modulation der Profiloberfläche 5.

Als gestrichelte Linie ist in Figur 1 der Querschnitt einer Grenzfläche 8 zwischen Cap 3 und Base 4 markiert, wie sie in einem beispielhaften Laufstreifenmodell und gemäß einem beispielhaften Herstellungsverfahren vor dem Einprägen des Profils durch den Laufstreifen 1 verlaufen war. Dementsprechend war die Grenzfläche 8 vor dem Einprägen des Profils im Wesentlichen auf einem konstanten radialen Niveau verlaufen, so wie auch die Oberfläche der Cap 3 vor dem Einprägen des Profils im Wesentlichen flach konfiguriert war. Zur Herstellung des in Figur 1 gezeigten Laufstreifens 1 wurden die Textilcorde 2 radial zwischen der Cap 3 und der Base 4 an der Grenzfläche 8 platziert. Der Laufstreifen 1 wurde daraufhin in eine Reifenform verbracht, in welcher das Profil mit der radial modulierten Profiloberfläche 5 in den Laufstreifen 1 geprägt wurde. Hierbei ist die Modulation von der auf der Cap 3 angeordneten Profiloberfläche 5 durch das Material des Laufstreifens 1 so nach radial innerhalb vorgedrungen, dass die Grenzfläche 8 zwischen Cap 3 und Base 4 mit den daran verlaufenden Textilcorden 2 ebenfalls eine radiale Modulation erfahren hat, wie in Figur 1 an dem geschwungenen Verlauf der Textilcorde 2 erkennbar. Die mit den Referenzzeichen 8 und 2 gekennzeichneten Linien stellen in einer anderen Betrachtungsweise auch zwei verschiedene Konfigurationen der an der Grenzfläche 8 verlaufenden Textilcorde 2 vor bzw. nach dem Einprägen des Profils dar. Die in diesem Absatz beschriebenen Zusammenhänge sind spezifisch für die beschriebene Ausführungsform und deren Abwandlungen. Alternativ könnte die Base 4 auch unabhängig von dem Einprägen des Profils oder bereits zuvor eine radiale Modulation aufweisen, wobei auch die Textilcorde 2 entsprechend direkt mit einer radialen Modulation auf die Base 4 gelegt würden. In diesem Fall kann optional zusätzlich eine Verstärkung oder Veränderung der initialen radialen Modulation der Textilcorde 4 durch das Einprägen eines Profils erfolgen.

Figur 2 zeigt Projektion des Verlaufs von Textilcorden 2 auf eine von der Umfangsrichtung U und Axialrichtung A aufgespannte Fläche (vgl. Koordinatenkreuz in der oberen Hälfte der Abbildung). Hierbei kann es sich um den Verlauf der Textilcorde 2 in dem in Figur 1 dargestellten Laufstreifen 1 handeln; eine entsprechende radiale Modulation der Textilcorde 2 ist in der gewählten Ansicht nicht auflösbar.

Die Projektionen der Textilcorde 2 verlaufen parallel zueinander, wobei jeweils ein Winkel 7 mit der Axialrichtung A eingeschlossen wird, wobei der Winkel unter 20° liegt. Die Textilcorde 2 weisen somit Hauptrichtungskomponenten in Axialrichtung A auf. Die Textilcorde 2 verlaufen in gleichmäßigen Abständen d zueinander. Eine Dickenausdehnung der Textilcorde 2 ist in den Abbildungen der besseren Übersicht halber nicht dargestellt. Geeignete Durchmesser sind den Ansprüchen und der restlichen Beschreibung zu entnehmen.

Mit den Textilcorden 2 verwoben verlaufen weitere Textilcorde 2a durch den Laufstreifen 1. Die weiteren Textilcorde 2a können wie die Textilcorde 2 in Radialrichtung R moduliert sein. Die in Figur 2 dargestellten Projektionen der weiteren Textilcorde 2a auf die von der Axialrichtung A und Umfangsrichtung U aufgespannte Fläche verlaufen ungefähr senkrecht zu den Projektionen der Textilcorde 2, sodass sich eine gitterartige Konfiguration ergibt. Die Winkel der Verläufe der Textilcorde 2 und der weiteren Textilcorde 2a sowie die Abstände der Verläufe der Textilcorde 2 und weiteren Textilcorde 2a können variieren. Beispielsweise ist auch eine im Wesentlichen zu einer Reifenäquatorebene spiegelsymmetrische Anordnung zwischen Textilcorden 2 und weiteren Textilcorden 2a als vorteilhafte Ausführungsform von der Erfindung umfasst.

### Bezugszeichenliste

- 1: Laufstreifen
- 2: Textilcorde
- 2b: weitere Textilcorde
- 3: Cap
- 4: Base
- 5: Profiloberfläche
- 7: Winkel zur Axialrichtung
- 8: Grenzfläche zwischen Cap und Base vor dem Einprägen des Profils
- d: Abstand zwischen Textilcorden
- A: Axialrichtung
- R: Radialrichtung
- U: Umfangsrichtung

## Patentansprüche

1. Laufstreifen (1) für einen Fahrzeugreifen,
**dadurch gekennzeichnet,**
**dass** Textilcorde (2) durch den Laufstreifen (1) verlaufen.

2. Laufstreifen (1) gemäß Anspruch 1, **dadurch gekennzeichnet, dass** der Verlauf der Textilcorde (2) durch den Laufstreifen (1) eine Richtungskomponente in Axialrichtung (A) aufweist.

3. Laufstreifen (1) gemäß einem der Ansprüche 1 oder 2, **dadurch gekennzeichnet, dass** der Verlauf der Textilcorde (2) durch den Laufstreifen eine Hauptrichtungskomponente in Axialrichtung (A) aufweist.

4. Laufstreifen (1) gemäß einem der Ansprüche 1 bis 3, **dadurch gekennzeichnet, dass** der Laufstreifen (1) eine Cap (3) und eine Base (4) umfasst, wobei die Textilcorde (2) radial zwischen der Cap (3) und der Base (4) angeordnet sind.

5. Laufstreifen (1) gemäß einem der Ansprüche 1 bis 4, **dadurch gekennzeichnet, dass** der Verlauf der Textilcorde (2) in dem Laufstreifen (1) entlang der Radialrichtung (R) moduliert ist.

6. Laufstreifen (1) gemäß Anspruch 5, **dadurch gekennzeichnet, dass** der Laufstreifen (1) ein Profil mit in Radialrichtung (R) modulierter Profiloberfläche (5) umfasst, wobei die Modulation des Verlaufs der Textilcorde (2) der Modulation der Profiloberfläche (5) mit einer verringerten Amplitude im Wesentlichen folgt.

7. Laufstreifen (1) gemäß einem der Ansprüche 1 bis 6, **dadurch gekennzeichnet, dass** die auf eine von der Axialrichtung (A) und der Umfangsrichtung (U) aufgespannte Fläche projizierten Verläufe der Textilcorde (2) in einem Winkel (7) von weniger als 90°, vorzugsweise von weniger als 45°, weiter vorzugsweise von weniger als 20° zu der Axialrichtung (A) verlaufen.

8. Laufstreifen (1) gemäß einem der Ansprüche 1 bis 7, **dadurch gekennzeichnet, dass** sich die Textilcorde (2) über die gesamte axiale Breite des Laufstreifens (1) erstrecken.

9. Laufstreifen (1) gemäß einem der Ansprüche 1 bis 8, **dadurch gekennzeichnet, dass** die durch den Laufstreifen (1) verlaufenden Textilcorde (2) mit weiteren Textilcorden (2b) verwoben sind.

10. Laufstreifen (1) gemäß einem der Ansprüche 1 bis 9, **dadurch gekennzeichnet, dass** die Textilcorde (2) Polyester, Nylon, Aramid oder Mischungen dieser Materialien umfassen.

11. Laufstreifen (1) gemäß einem der Ansprüche 1 bis 10, **dadurch gekennzeichnet, dass** die Textilcorde (2) jeweils einen Durchmesser zwischen 0,3 und 1,0 mm aufweisen.

12. Laufstreifen (1) gemäß einem der Ansprüche 1 bis 11, **dadurch gekennzeichnet, dass** die Textilcorde (2) in Abständen (d) zwischen 0,1 und 10 mm zueinander verlaufen.

13. Fahrzeugreifen mit einem Laufstreifen (1) gemäß einem der Ansprüche 1 bis 12.

14. Verfahren zur Herstellung eines Laufstreifens (1) für einen Fahrzeugreifen, wobei eine Base (4) bereitgestellt wird,
**dadurch gekennzeichnet,**
**dass** Textilcorde (2) auf einer radialen Außenseite der Base (4) des Laufstreifens (1) platziert werden, wobei eine Cap (3) radial über der Base (4) und den Textilcorden (2) aufgebracht wird.

15. Verfahren gemäß Anspruch 14, **dadurch gekennzeichnet, dass** die Base (4), die Textilcorde (2) und die Cap (3) in einer Reifenform, umfassend ein Profilnegativ weiterverarbeitet werden, sodass die radial äußere Oberfläche der Cap (3) in Radialrichtung (R) zu einer Profiloberfläche (5) moduliert wird, wobei die Modulation durch das Material des Laufstreifens (1) so nach radial innerhalb vordringt, dass der Verlauf der Textilcorde (2) der Modulation der Profiloberfläche (5) mit einer verringerten Amplitude im Wesentlichen folgt.
